# FASCICULE DE BREVET EUROPEEN

(11) **EP 3 213 263 B1**
(45) Date de publication et mention de la délivrance du brevet: **18.09.2019**
(21) Numéro de dépôt: 15793879.6
(22) Date de dépôt: 20.10.2015
(51) Int. Cl.: G06K 19/077

(54) **ETIQUETTE ANTI-CONTREFAÇON HYBRIDE**
HYBRIDES FÄLSCHUNGSSICHERES ETIKETT
HYBRID ANTI-COUNTERFEIT LABEL

(30) Priorité: 28.10.2014 FR 1460363
(43) Date de publication de la demande: 06.09.2017
(73) Titulaire: WISeKey Semiconductors, 13590 Meyreuil (FR)
(72) Inventeur: BOIRON, Ghislain, F-13090 Aix en Provence (FR); PIC, Pierre, F-13600 Ceyreste (FR)
(74) Mandataire: de Jong, Jean Jacques
(86) Numéro de dépôt international: PCT/FR2015/052813
(87) Numéro de publication internationale: WO 2016/066925

(56) Documents cités:
- WO-A1-2004/057519
- DE-A1-102008 054 711
- JP-A- 2007 293 797

## Description

### Domaine technique

L'invention est relative aux dispositifs d'indentification sans contact de type NFC (de l'anglais « Near Field Communication »), et plus spécifiquement à un dispositif NFC anti-contrefaçon permettant de garantir l'authenticité du contenu d'une bouteille.

### Arrière-plan

Le brevet US7898422 décrit un dispositif NFC anti-contrefaçon intégré dans un bouchon de bouteille de vin. Le dispositif est agencé pour que l'insertion d'un tirebouchon endommage l'antenne ou le microcircuit de commande.

Lorsque le dispositif est intègre, il peut être interrogé à distance par un lecteur NFC pour lire des informations sur le produit, et également pour confirmer l'authenticité des informations. Lorsque le bouchon a été retiré, le dispositif NFC se trouve endommagé, de sorte que le bouchon ne peut pas être réutilisé pour authentifier le contenu d'une nouvelle bouteille.

Ce type de dispositif a une structure mécanique complexe qui peut résulter en une augmentation non souhaitable du coût du bouchon.

Le document DE 10 2008 054711 A1 divulgue une étiquette NFC hybride comprenant des composants répartis sur un substrat en matière plastique et un substrat à base de papier couplés entre eux par un dipôle agencé sur le substrat en matière plastique et un bobinage agencé sur le substrat à base de papier. Ce dispositif est destiné au fonctionnement dans la bande fréquences UHF.

### Résumé

De façon générale, on prévoit une étiquette NFC hybride comprenant des composants répartis sur un substrat en matière plastique et un substrat à base de papier, couplés entre eux par un transformateur formé par un premier bobinage agencé sur le substrat en matière plastique et un deuxième bobinage agencé sur le substrat à base de papier.

Le substrat à base de papier peut être généralement en forme de ruban comprenant une zone sacrificielle traversée par des pistes conductrices reliant les composants du substrat à base de papier.

Le substrat à base de papier peut comprendre un microcircuit de commande relié au deuxième bobinage, et le substrat en matière plastique peut comprendre un bobinage d'antenne relié au premier bobinage.

Le substrat à base de papier peut comprendre une impédance reliée au deuxième bobinage par une piste conductrice traversant la zone sacrificielle, et le substrat en matière plastique peut comprendre un microcircuit de commande et un bobinage d'antenne reliés au premier bobinage.

L'impédance peut être un court-circuit.

Le microcircuit de commande peut être configuré pour être alimenté par le bobinage d'antenne et inclure des fonctions de transmission d'informations et des fonctions cryptographiques, les composants de l'étiquette NFC étant choisis pour que la rupture de la zone sacrificielle abaisse la puissance d'alimentation reçue par le microcircuit à un niveau insuffisant pour alimenter les fonctions cryptographiques, mais à un niveau encore suffisant pour alimenter les fonctions de transmission.

Un conteneur peut être prévu, comprenant un élément de fermeture ; le substrat à base de papier d'une étiquette hybride, fixé sur le conteneur en travers de l'élément de fermeture par une couche d'adhésif ; et le substrat en matière plastique de l'étiquette hybride, fixé sur le conteneur avec son premier bobinage plaqué sur le deuxième bobinage du substrat à base de papier.

L'invention est définie par la revendication 1, les revendications dépendantes 2 à 6 en définissant des réalisations optionnelles.

### Description sommaire des dessins

Des modes de réalisation seront exposés dans la description suivante, faite à titre non limitatif en relation avec les figures jointes parmi lesquelles :
- la figure 1 représente schématiquement un mode de réalisation d'étiquette NFC anti-contrefaçon pour une bouteille ;
- la figure 2 est un schéma-bloc électrique équivalent du dispositif de la figure 1 ;
- la figure 3 illustre une mise en situation du dispositif de la figure 1 sur une bouteille de vin ;
- les figures 4A et 4B représentent schématiquement deux parties d'un premier mode de réalisation d'une étiquette NFC anti-contrefaçon hybride pour une bouteille ;
- la figure 4C illustre le contour d'une étiquette NFC hybride assemblée ;
- la figure 5 est un schéma-bloc électrique équivalent du dispositif des figures 4A et 4B ;
- les figures 6A et 6B représentent schématiquement deux parties d'un deuxième mode de réalisation d'une étiquette NFC anti-contrefaçon hybride ;
- la figure 7 est un schéma-bloc électrique équivalent du dispositif des figures 6A et 6B ;
- la figure 8 illustre une variante du circuit de la figure 7.

On propose ci-après des dispositifs anti-contrefaçon de type NFC pour des conteneurs, notamment des bouteilles ou des flacons, sous la forme d'étiquettes peu coûteuses à fabriquer.

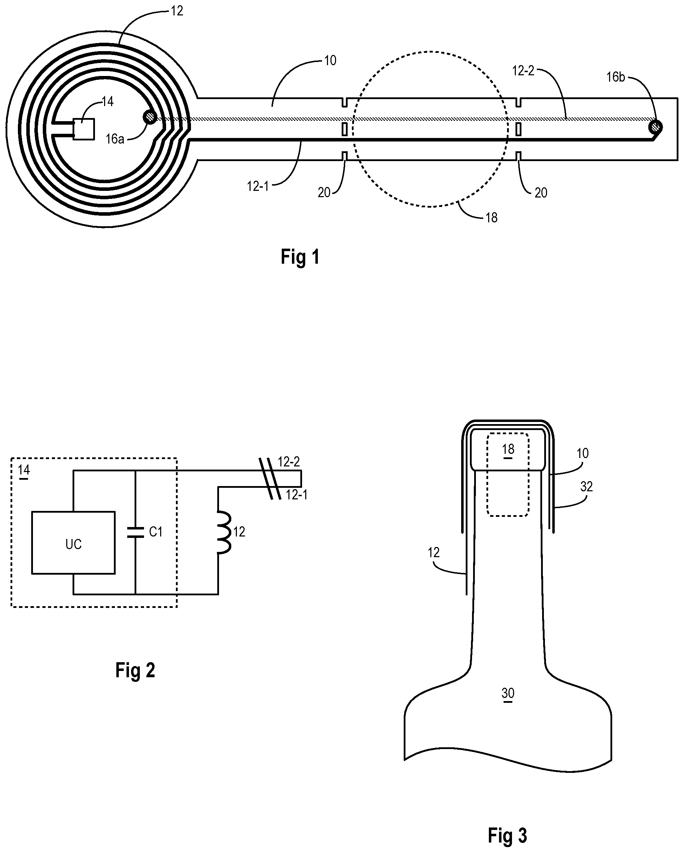

La figure 1 illustre un premier mode de réalisation d'une étiquette NFC anti-contrefaçon simple. L'étiquette est sous la forme d'un ruban 10 en matière isolante servant de substrat pour former des pistes conductrices selon les techniques courantes de fabrication d'étiquettes RFID. L'une des extrémités du ruban est agrandie pour loger une antenne NFC 12 formée de plusieurs spires d'une piste conductrice.

Un microcircuit 14 est connecté entre deux segments de la spire centrale de l'antenne, par exemple selon la technique dite « flip-chip », par collage avec une colle conductrice, ou par câblage (« wire-bonding »). Le microcircuit intègre les fonctions de gestion du dispositif NFC. Le dispositif pouvant offrir une fonction d'authentification, il est de type actif, c'est-à-dire que le microcircuit intègre un microcontrôleur et des fonctions de cryptographie. Le microcircuit puise alors son alimentation de l'énergie fournie à l'antenne par un lecteur NFC, qui peut être un smartphone, une tablette, une montre, ou tout dispositif muni d'une interface NFC.

La piste conductrice formant l'antenne comprend une boucle s'étendant sur la longueur du ruban vers l'extrémité opposée à l'antenne. Dans l'exemple représenté, la boucle comprend un segment de piste droit 12-1 partant de l'extrémité de la spire externe de l'antenne, sur la même face du ruban. Un deuxième segment de piste droit 12-2 est formé sur la face opposée du ruban, et relie l'extrémité de la spire interne de l'antenne à l'extrémité distale du premier segment 12-1 par des vias 16a et 16b.

Le dispositif est conçu pour être fixé sur un conteneur, par exemple une bouteille, de sorte que la partie centrale du ruban soit placée en travers d'un élément de fermeture 18 du conteneur, par exemple un bouchon. On souhaite que le ruban soit rompu, en provoquant également la rupture de la boucle 12-1, 12-2, lorsque la bouteille est ouverte, c'est-à-dire lorsque le bouchon 18 est retiré. Pour cela, la fixation du ruban sur la bouteille est conçue pour présenter une résistance de rupture supérieure à la résistance de rupture du ruban.

On peut également diminuer la résistance de rupture du ruban en prévoyant, comme cela est représenté, des amorces de rupture 20 au voisinage du bouchon.

Le ruban peut être fixé sur le conteneur par la face sur laquelle sont formées la majorité des pistes conductrices. L'adhérence des pistes sur le conteneur peut être plus élevée que l'adhérence des pistes sur le ruban. Il en résulte que toute tentative de décollage de l'étiquette entraîne l'arrachement des pistes conductrices, qui restent fixées au conteneur.

La boucle 12-1, 12-2 n'a pas besoin d'atteindre l'extrémité du ruban. Il suffit qu'elle aille au-delà d'une zone sacrificielle où la rupture est probable. Cependant, si elle atteint l'extrémité, la surface de piste fixée sur la bouteille augmente, ce qui augmente la probabilité de destruction de l'étiquette lors d'une tentative de décollage de l'étiquette.

Les pistes pouvant être réalisées en aluminium, cela rend difficile la réparation des pistes sectionnées par soudure ou brasure du fait de la couche d'oxyde isolante qui se forme sur l'aluminium dès son exposition à l'air.

La figure 2 est un schéma électrique équivalent du dispositif de la figure 1. Le microcircuit 14 comprend un microcontrôleur dédié UC qui met en oeuvre les fonctions logiques et analogiques du microcircuit, notamment l'alimentation en puissance du circuit à partir du champ fourni à l'antenne par un lecteur NFC, la démodulation de signaux transmis par le lecteur, la modulation de l'impédance de l'antenne pour émettre des signaux vers le lecteur, et, le cas échéant, la génération de clés sécurisées pour authentifier les informations émises.

Le microcircuit comprend également un condensateur C1 connecté aux bornes de l'antenne 12 qui définit, avec l'inductance de l'antenne, la fréquence d'accord du circuit d'antenne. La fréquence d'accord est réglée sur une fréquence nominale typique choisie pour une bonne interopérabilité entre dispositifs conformes aux normes, par exemple 14 MHz.

Comme on le voit à la figure 2, la rupture de la boucle 12-1, 12-2 déconnecte l'antenne 12 du microcircuit 14, de sorte que ce dernier ne peut plus être alimenté. Ainsi, si la bouteille est réutilisée, son dispositif NFC reste muet à la lecture, de sorte que l'utilisateur ne reçoit pas les informations qu'il attend, notamment l'authentification confirmant l'origine du produit.

La figure 3 représente un exemple de mise en situation d'une étiquette NFC anti-contrefaçon du type de la figure 1 sur une bouteille de vin 30. (Pour la clarté de la figure, les espaces entre éléments ont été agrandis de façon exagérée.) Le bouchon 18 affleure la partie supérieure du col de la bouteille. La partie centrale du ruban 10, la zone sacrificielle, recouvre horizontalement le bouchon 18. Les extrémités du ruban sont pliées vers le bas à la verticale pour épouser les flancs du col, et sont fixées sur le col par un adhésif ou de la colle. Le ruban peut être suffisamment souple pour permettre le pliage à la partie supérieure du col et épouser le rayon du col. Dans ce cas, l'antenne est de préférence de type plan.

Une bouteille de vin est généralement munie d'une capsule de protection 32 qui enveloppe le bouchon et la partie supérieure du col. Comme cela est représenté, la capsule peut également envelopper le ruban 10. Dans ce cas, comme la capsule est souvent métallique, il est préférable que l'antenne 12 soit en dehors de la capsule pour être exposée aux champs électromagnétiques. La longueur du ruban 10 est choisie en conséquence.

L'étiquette NFC ainsi disposée peut être lue par un consommateur à l'aide de son smartphone équipé d'une fonction NFC ou tout autre lecteur NFC. Il pourra notamment, lorsque l'étiquette est intègre, procéder à une authentification à l'aide d'une clé sécurisée disponible dans l'étiquette, servant à confirmer que le produit est conforme aux informations fournies par l'étiquette via un serveur d'authentification et une application dédiée. Il pourra en outre, à l'aide de la même application ou une application générique, consulter les caractéristiques du produit, incluant le type d'informations pouvant figurer sur une étiquette papier de la bouteille. Plusieurs bouteilles d'un même lot pourraient avoir des étiquettes partageant un même identifiant ou clé.

Une étiquette NFC peut être réalisée typiquement sur un substrat papier ou un substrat en matière plastique (souvent le polytéréphtalate d'éthylène ou PET).

Le substrat papier, plus souple que le substrat PET, se prête particulièrement bien à un assemblage sur le col d'une bouteille, du type de la figure 3. En effet, un tel substrat s'adapte facilement aux formes courbes des cols de bouteille et la fixation peut être faite à l'aide d'une couche d'adhésif préalablement enduite sur le substrat. Le procédé de montage d'une telle étiquette est facile à mettre en oeuvre avec des équipements existants conçus pour poser des témoins visuels adhésifs sur des cols de bouteille. Le substrat papier est fragile, ce qui favorise la rupture des pistes conductrices à la moindre tentative de retrait de l'étiquette, à la main ou à l'aide d'un dissolvant. En outre les pistes conductrices sont typiquement réalisées à l'aide d'encre conductrice qui est facilement dissoute.

Cependant, les pistes conductrices réalisables sur un substrat papier ont une résistivité importante (encre à base de particules d'argent) par rapport à des pistes réalisables sur un substrat PET (cuivre ou aluminium). Ainsi, à dimensions égales, une antenne réalisée sur substrat papier a un facteur de qualité plus faible qu'une antenne réalisée sur substrat PET. Il en résulte, avec les lecteurs NFC courants, qu'il peut être difficile de concevoir une antenne sur substrat papier qui fournisse suffisamment de puissance à un microcircuit possédant des fonctions avancées, comme des fonctions cryptographiques, même en plaquant le lecteur NFC sur l'antenne. Ainsi, une étiquette NFC du type de la figure 1 serait plutôt réalisée sur un substrat PET.

### Description de modes de réalisation

On propose ci-après des modes de réalisation d'étiquettes NFC, qualifiées d'hybrides, permettant de combiner les avantages des substrats papier et des substrats PET.

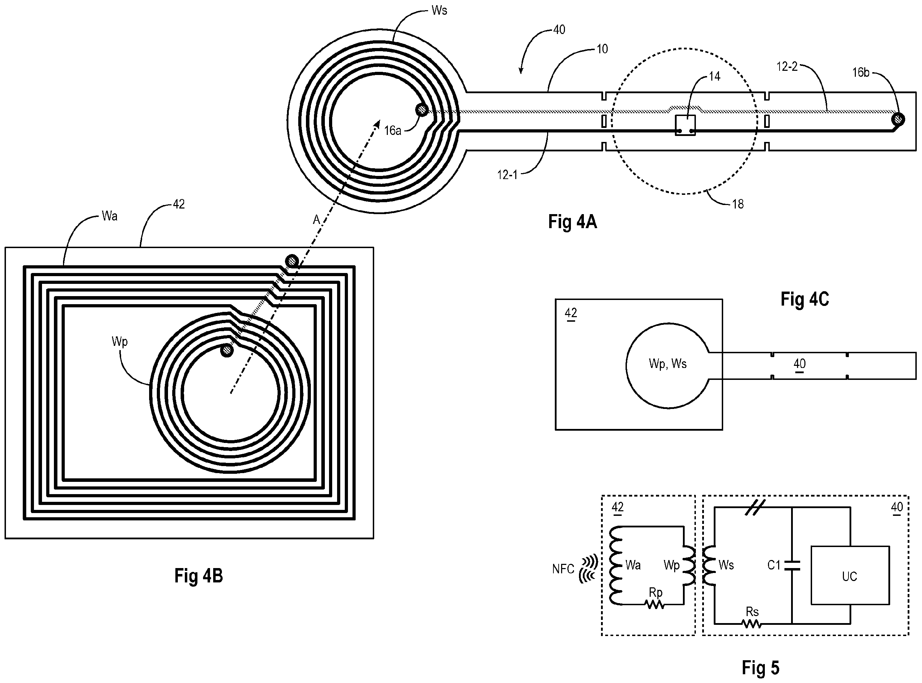

Les figures 4A et 4B représentent schématiquement deux sections d'un premier mode de réalisation d'étiquette hybride.

La figure 4A représente une section 40 de l'étiquette réalisée sur un substrat papier. Cette section peut avoir une configuration similaire à celle de l'étiquette de la figure 1. Le bobinage 12 qui servait d'antenne dans l'étiquette de la figure 1, sert ici de bobinage secondaire Ws d'un transformateur. Pour cette fonction, le bobinage Ws n'a pas besoin d'être conçu pour alimenter le microcircuit 14 à partir du champ d'un lecteur NFC. Au contraire, comme on le verra ci-après, le bobinage Ws peut être conçu pour être petit et donc présenter une faible résistivité pour un nombre de spires donné.

Le substrat étant en papier, il est préférable de placer le microcircuit 14 dans une zone qui ne sera pas courbée à l'assemblage, par exemple dans la zone sacrificielle destinée à recouvrir le bouchon 18, en série sur le conducteur 12-1.

La figure 4B représente la deuxième section 42 de l'étiquette hybride, réalisée sur un substrat PET. Cette partie comprend un bobinage primaire Wp conçu pour être couplé au bobinage secondaire Ws de la section 40 pour former un transformateur entre les deux sections de l'étiquette. Ainsi, le bobinage Wp est à assembler en correspondance avec le bobinage secondaire Ws, comme cela est indiqué par une flèche A. La section 42 comprend en outre un bobinage d'antenne Wa dont la taille peut être conçue pour capter la majeure partie du champ émis par un lecteur NFC classique. La résistivité des pistes conductrices réalisables sur un substrat PET est suffisamment faible pour que le bobinage d'antenne ait un bon facteur de qualité même s'il est de grande taille ou comporte un nombre élevé de spires. Les bobinages Wa et Wp sont connectés en série de manière que le courant tourne dans le même sens dans les deux bobinages. Ainsi, le champ induit par le courant dans le bobinage Wp est dans le même sens que le champ émis par le lecteur NFC.

Comme cela est représenté à titre d'exemple, le bobinage primaire Wp peut être placé à l'intérieur du bobinage d'antenne Wa.

Avec cette configuration, le bobinage Wp concentre dans une faible surface l'ensemble du champ capté par le bobinage d'antenne Wa. Ce champ concentré est à son tour capté pratiquement en totalité par le bobinage Ws. Le bobinage Ws, de petite taille, et donc de relativement faible résistivité, parvient à extraire de ce champ suffisamment de puissance pour alimenter le microcircuit 14.

La figure 4C illustre la configuration de l'étiquette hybride une fois que ses deux sections 40 et 42 ont été assemblées. En pratique, le substrat papier 40 peut être enduit d'une couche d'adhésif et être fixé sur une bouteille dans une première phase d'assemblage. Dans une deuxième phase d'assemblage, le substrat PET 42 est fixé par collage sur la bouteille de manière que son bobinage Wp soit plaqué sur le bobinage Ws du substrat papier. Les bobinages Ws et Wp peuvent ainsi n'être séparés que par une couche de colle et, selon le cas, l'épaisseur du substrat papier (typiquement 50 à 100 microns), ce qui les rapproche suffisamment pour obtenir le couplage souhaité.

La figure 5 est un schéma électrique équivalent de l'étiquette hybride des figures 4A et 4B. La section 40, sur substrat papier, a une configuration similaire à celle de la figure 2, où le bobinage Ws remplace le bobinage d'antenne 12. Une résistance série Rs représente la résistivité de la piste conductrice du bobinage Ws.

La section 42, sur substrat PET, comprend les bobinages Wa et Wp reliés l'un à l'autre par une résistance série Rp représentant la résistivité de la piste conductrice des bobinages Wa et Wp. Si le transformateur Wp/Ws a un rapport 1:1, l'impédance du bobinage Wa et la résistance Rp sont vues par le circuit de la section 40 aux bornes du bobinage secondaire Ws, de sorte qu'on retrouve un circuit équivalent à celui de la figure 2.

Une rupture de la zone sacrificielle de l'étiquette hybride entraîne la coupure d'au moins une des pistes conductrices reliant le microcircuit 14 au bobinage Ws, de sorte que le microcircuit 14 ne peut plus être alimenté et l'étiquette devient muette. L'ouverture de la bouteille à l'aide d'un tire-bouchon peut même détruire le microcircuit 14, s'il est placé au niveau du bouchon.

Dans certains cas, l'utilisateur pourrait souhaiter consulter de nouveau les informations après ouverture, par exemple pour les partager avec un ami, ou se rendre sur le site web du producteur pour commander de nouvelles bouteilles. Dans cette situation, l'utilisateur souhaite simplement lire les informations disponibles dans l'étiquette NFC sans procéder à une authentification.

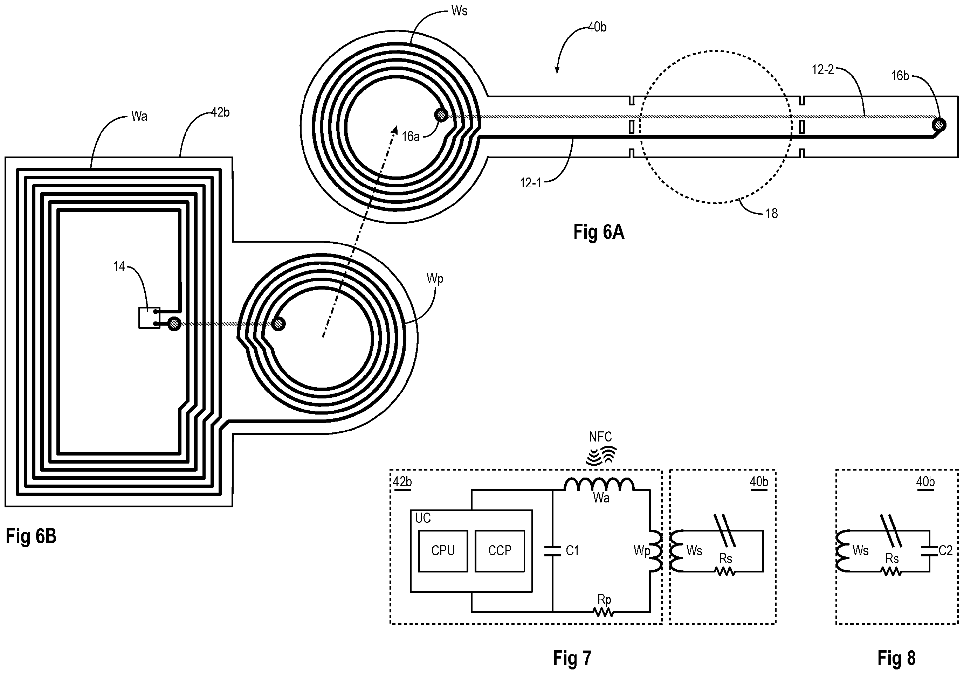

Les figure 6A et 6B représentent deux sections d'un mode de réalisation d'étiquette NFC hybride permettant une authentification lorsqu'elle est intègre, et une simple lecture des informations lorsqu'elle a été brisée.

La figure 6A représente une section 40b de l'étiquette réalisée sur un substrat papier. Cette section peut être similaire à la section 40 de la figure 4A, sauf qu'elle ne comprend pas de microcircuit 14. Le bobinage secondaire Ws est simplement court-circuité par une boucle formée par les conducteurs 12-1 et 12-2, qui traversent la zone sacrificielle du ruban.

La figure 6B représente la deuxième section 42b de l'étiquette hybride, réalisée sur un substrat PET. Cette section comprend, comme la section 42 de la figure 4B, les deux bobinages Wa et Wp. Ces deux bobinages ont été représentés à titre d'exemple selon une configuration alternative - ils sont séparés au lieu d'être l'un dans l'autre. En outre, le bobinage d'antenne Wa est orienté transversalement au lieu d'être orienté longitudinalement. Le microcircuit 14 est intégré dans cette section 42b et est connecté en série avec les bobinages Wa et Wp.

La figure 7 est un digramme électrique équivalent de l'étiquette hybride assemblée des figures 6A et 6B. Dans la section 40b, le bobinage secondaire Ws est court-circuité par la résistance série Rs.

Dans la section 42b, les bobinages d'antenne Wa et primaire Wp se trouvent dans une boucle avec le condensateur C1 du microcircuit et la résistance série Rp. Avec un rapport de transformation 1:1, le bobinage primaire Wp se comporte comme la résistance Rs. Ainsi, la fréquence d'accord du circuit d'antenne est définie par l'inductance du bobinage Wa et la valeur du condensateur C1. Ces éléments sont choisis pour accorder le circuit d'antenne sur une fréquence nominale, par exemple 14 MHz.

Lorsque l'étiquette est brisée, notamment par sa zone sacrificielle au niveau du bouchon, le circuit secondaire du transformateur est ouvert. Le bobinage primaire Wp se comporte alors comme une inductance qui décale vers le bas la fréquence d'accord du circuit d'antenne. Il en résulte que le microcircuit peut toujours être alimenté par le champ d'un lecteur, mais que la puissance transmise est inférieure.

Pour procéder à des opérations d'authentification, le microcontrôleur UC du microcircuit 14 possède des fonctions cryptographiques. Le microcontrôleur peut comprendre un processeur CPU d'usage général assisté d'un coprocesseur cryptographique CCP.

La simple lecture d'informations stockées dans le microcircuit et leur transmission par l'antenne sollicite peu le processeur CPU et demande peu de puissance électrique. Le coprocesseur CCP n'est pas utilisé. Le courant consommé peut être inférieur à 1 mA. Ce niveau de puissance peut être fourni même par un circuit d'antenne désaccordé.

Une opération cryptographique, par contre, sollicite le processeur CPU et, le cas échéant, le coprocesseur CCP, et peut consommer un courant de plusieurs milliampères. Ce niveau de puissance ne peut être fourni si le circuit d'antenne est trop désaccordé, même en venant toucher l'étiquette avec le lecteur.

Compte tenu de ces éléments, on ajuste l'inductance du bobinage primaire Wp de sorte que le circuit d'antenne soit accordé suffisamment pour produire le courant requis pour une simple lecture et transmission d'informations, mais insuffisamment pour produire le courant requis par une opération cryptographique.

Dans un exemple où la fréquence nominale est de 14 MHz, on peut obtenir ce fonctionnement souhaité lorsque la fréquence d'accord décalée est voisine de 12 MHz dans une technologie donnée.

Le microcircuit peut alors être programmé pour commencer systématiquement par la production des informations et finir par les opérations cryptographiques. La rupture de la zone sacrificielle de l'étiquette provoque le décalage d'accord du circuit d'antenne. Dans ce cas, au moment où le microcircuit démarre les opérations cryptographiques, la tension d'alimentation s'écroule en provoquant la réinitialisation du microcircuit. Le microcircuit redémarre et recommence le même cycle.

La figure 8 représente une variante du circuit secondaire de la section 40b. Au lieu d'un court-circuit, le circuit comprend un condensateur C2 relié aux bornes du bobinage Ws. Ce condensateur peut être réalisé, par exemple, à l'aide de zones conductrices déposées sur les deux faces du substrat papier, du côté opposé au bobinage Ws par rapport à la zone sacrificielle.

Avec cette configuration, lorsque l'étiquette est intègre, le bobinage primaire Wp se comporte essentiellement comme le condensateur C2. La fréquence d'accord du circuit d'antenne est alors définie par l'inductance du bobinage Wa et la capacité de l'association série des condensateurs C1 et C2.

Lorsque l'étiquette est brisée, le circuit secondaire est ouvert, de sorte que le bobinage primaire Wp se comporte de nouveau comme une inductance. La fréquence d'accord décalée est définie par la valeur du condensateur C1 et la somme des inductances des bobinages Wa et Wp.

Une autre variante peut consister, dans le circuit secondaire de la figure 7, à prévoir un condensateur au voisinage du bobinage Ws également court-circuité par la boucle traversant la zone sacrificielle. Lorsque l'étiquette est intègre, le bobinage primaire Wp se comporte comme la résistance série Rs. Lorsque l'étiquette est brisée, le bobinage Wp se comporte comme le condensateur restant connecté aux bornes du bobinage secondaire. A la place d'un simple condensateur, on peut prévoir une impédance plus complexe permettant de faciliter l'ajustement des fréquences d'accord.

De nombreuses variantes et modifications des modes de réalisation décrits ici apparaîtront à l'homme du métier. Les circuits primaires réalisés sur le substrat PET ont été décrits comme formés essentiellement par des bobinages. Il est bien entendu possible, selon les besoins d'ajustement des fréquences d'accord, d'intégrer des condensateurs dans les circuits primaires, sous la forme de couches conductrices déposées de part et d'autre du substrat PET.

## Revendications

1. Etiquette NFC hybride comprenant des composants répartis sur un substrat en matière plastique (42, 42b) et un substrat à base de papier (40, 40b), couplés entre eux sans contact, **caractérisée en ce que** :
• les composants sont couplés par un transformateur formé par un premier bobinage (Wp) agencé sur le substrat en matière plastique et un deuxième bobinage (Ws) agencé sur le substrat à base de papier ;
• le substrat à base de papier est généralement en forme de ruban (10) comprenant une zone sacrificielle traversée par des pistes conductrices reliant les composants du substrat à base de papier ; et
• le substrat en matière plastique supporte un bobinage d'antenne (Wa) relié au premier bobinage (Wp).

2. Etiquette selon la revendication 1, dans laquelle le substrat à base de papier supporte un microcircuit de commande (14) relié au deuxième bobinage (Ws).

3. Etiquette selon la revendication 1, dans laquelle :
• le substrat à base de papier supporte une impédance reliée au deuxième bobinage (Ws) par une piste conductrice traversant la zone sacrificielle, et
• le substrat en matière plastique supporte un microcircuit de commande (14).

4. Etiquette selon la revendication 3, dans laquelle l'impédance est un court-circuit.

5. Etiquette selon la revendication 3, dans laquelle le microcircuit de commande (14) est configuré pour être alimenté par le bobinage d'antenne (Wa) et inclut des fonctions de transmission d'informations (CPU) et des fonctions cryptographiques (CCP), les composants de l'étiquette NFC étant choisis pour que la rupture de la zone sacrificielle abaisse la puissance d'alimentation reçue par le microcircuit à un niveau insuffisant pour alimenter les fonctions cryptographiques, mais à un niveau encore suffisant pour alimenter les fonctions de transmission.

6. Conteneur (30) comprenant :
• un élément de fermeture (18) ;
• le substrat à base de papier (40) d'une étiquette hybride selon la revendication 1, fixé sur le conteneur en travers de l'élément de fermeture par une couche d'adhésif ; et
• le substrat en matière plastique (42) de l'étiquette hybride, fixé sur le conteneur avec son premier bobinage (Wp) plaqué sur le deuxième bobinage (Ws) du substrat à base de papier.

## Patentansprüche

1. Hybrides NFC-Etikett, das Komponenten umfasst, die auf einem Kunststoffsubstrat (42, 42b) und einem papierbasierten Substrat (40, 40b) verteilt und berührungslos miteinander gekoppelt sind, **dadurch gekennzeichnet, dass**:
• die Komponenten durch einen Transformator gekoppelt sind, der aus einer ersten Spule (Wp) auf dem Kunststoffsubstrat und einer zweiten Spule (Ws) auf dem papierbasierten Substrat gebildet ist;
• das papierbasierte Substrat im Allgemeinen bandförmig (10) mit einem Opferbereich ist, der von Leiterbahnen durchzogen ist, welche die Komponenten des papierbasierten Substrats verbinden; und
• das Kunststoffsubstrat eine Antennenspule (Wa) trägt, die mit der ersten Spule (Wp) verbunden ist.

2. Etikett nach Anspruch 1, wobei das papierbasierte Substrat eine Steuermikroschaltung (14) trägt, die mit der zweiten Spule (Ws) verbunden ist.

3. Etikett nach Anspruch 1, wobei:
• das papierbasierte Substrat eine Impedanz trägt, die mit der zweiten Spule (Ws) mittels einer Leiterbahn verbunden ist, welche die Opferzone durchquert, und
• das Kunststoffsubstrat eine Steuermikroschaltung (14) trägt.

4. Etikett nach Anspruch 3, wobei die Impedanz ein Kurzschluss ist.

5. Etikett nach Anspruch 3, wobei die Steuermikroschaltung (14) konfiguriert ist, um von der Antennenspule (Wa) versorgt zu werden und Informationsübertragungsfunktionen (CPU) und kryptographische Funktionen (CCP) einschließt, wobei die Komponenten des NFC-Etiketts derart ausgewählt sind, dass der Bruch der Opferzone die von der Mikroschaltung empfangene Stromversorgung auf ein Niveau reduziert, das für die Versorgung der kryptographischen Funktionen unzureichend ist, aber noch ausreicht, um die Übertragungsfunktionen zu versorgen.

6. Behälter (30), umfassend:
• ein Verschlusselement (18);
• das papierbasierte Substrat (40) eines Hybrid-Etiketts nach Anspruch 1, das auf dem Behälter durch das Verschlusselement mit einer Klebeschicht befestigt ist; und
• das Kunststoffsubstrat (42) des Hybrid-Etiketts, das auf dem Behälter mit seiner ersten Spule (Wp) auf der zweiten Spule (Ws) des papierbasierten Substrats aufgebracht befestigt ist.

## Claims

1. A hybrid NFC tag including components distributed on a plastic substrate (42, 42b) and a paper-based substrate (40, 40b), coupled together without contact, **characterized in that**:
• the components are coupled by a transformer formed by a first winding (Wp) arranged on the plastic substrate and a second winding (Ws) arranged on the paper-based substrate;
• the paper-based substrate is generally ribbon-shaped (10) comprising a sacrificial zone crossed by conductive tracks connecting the components of the paper-based substrate; and
• the plastic substrate carries an antenna winding (Wa) connected to the first winding (Wp).

2. The tag of claim 1, wherein the paper-based substrate carries a control microcircuit (14) connected to the second winding (Ws).

3. The tag of claim 1, wherein:
• the paper-based substrate carries an impedance connected to the second winding (Ws) by a conductive track crossing the sacrificial zone, and
• the plastic substrate carries a control microcircuit (14).

4. The tag of claim 3, wherein the impedance is a short circuit.

5. The tag of claim 3, wherein the control microcircuit (14) is configured to be powered by the antenna winding (Wa) and has information transmission functions (CPU) and cryptographic functions (CCP), the components of the NFC tag being chosen so that breaking the sacrificial zone lowers the power supply received by the microcircuit to a level insufficient to power the cryptographic functions, but at a level still sufficient to power the transmission functions.

6. A container (30) comprising:
• a closure element (18);
• the paper-based substrate (40) of a hybrid tag according to claim 1 attached to the container across the closure element by an adhesive layer; and
• the plastic substrate (42) of the hybrid tag, attached to the container with its first winding (Wp) placed against the second winding (Ws) of the paper-based substrate.
